# EUROPÄISCHE PATENTSCHRIFT

(11) **EP 0 753 393 B1**
(45) Veröffentlichungstag und Bekanntmachung des Hinweises auf die Patenterteilung: **18.10.2000**
(21) Anmeldenummer: 96110708.3
(22) Anmeldetag: 03.07.1996
(51) Int. Cl.: B29C 61/02, H02G 15/18

(54) **Wärmerückstellbarer Gegenstand aus einem Kunststoffmaterial**
Heat-shrinkable plastic article
Article thermorétractable en matière plastique

(30) Priorität: 14.07.1995 DE 29511390 U
(43) Veröffentlichungstag der Anmeldung: 15.01.1997
(73) Patentinhaber: N.V. RAYCHEM S.A., 3010 Kessel-Lo (BE)
(72) Erfinder: Stieb, Werner, Dipl.-Ing., 31655 Stadthagen (DE); Freckmann, Hans-Holger, 30855 Langenhagen (DE); Schift, Rudolf, 31655 Stadthagen (DE)
(74) Vertreter: Jay, Anthony William

(56) Entgegenhaltungen:
- EP-A- 0 116 391
- EP-A- 0 244 209
- DE-U- 29 519 179
- GB-A- 1 585 154
- US-A- 3 187 380

## Beschreibung

Die Erfindung betrifft einen wärmerückstellbaren Gegenstand nach dem Oberbegriff des Anspruchs 1.

Wärmeerholbare bzw. wärmerückstellbare Gegenstände sind seit langem bekannt und haben sich zum Umhüllen von Gegenständen, wie z. B. Rohren, Kabeln und Kabelverbindungen durchgesetzt. Für die Umhüllung von z. B. Spleißverbindungen von Nachrichtenkabeln wird üblicherweise eine Manschette um den Spleiß herumgelegt, an den Längskanten durch Überschieben einer Schiene zu einem Rohr geformt und auf den Kabelspleiß sowie den Mantel der Kabel durch Wärmezufuhr heruntergeschrumpft. Eine an der Innenseite der Manschette vorgesehene Heißschmelzkleberbeschichtung erweicht beim Schrumpfen und fließt in noch verbliebene Hohlräume und dichtet somit die Spleißverbindung nach außen hin ab.

Zur Überwachung von Kabelstrecken auf Dichtigkeit bzw. um Kabelstrecken ständig unter Druck zu betreiben, ist es bekannt, im Bereich einer Verbindungsmuffe ein Ventil einzubauen.

Bei einer Verbindungsmuffe nach dem britischen Patent 1 585 154 wird ein Ventil in einem Bereich der wärmeschrumpfbaren Hülle angeordnet, der eine vergrößerte Wanddicke aufweist. Dies wird z. B. dadurch bewerkstelligt, daß der angesprochene Bereich nicht gereckt oder gedehnt wird also nicht wärmerückstellbar ist.

Bei einer Lösung nach der EP-0 082 010 B1 wird das Ventil in einer metallischen Einlage bzw. einem metallischen Kanister befestigt und ragt mit seinem Anschlußende durch eine in der Manschette vorgesehene Öffnung.

Die EP-0 244 209 B1 beschreibt einen wärmeerholbaren Gegenstand aus einem wärmerückstellbaren Gewebe mit einem Ventil. Hierzu ist in dem wärmeerholbaren Gegenstand eine Öffnung vorgesehen, in welcher das Ventil wie an sich aus der Anordnung von Ventilen in Kfz- oder Fahrradschläuchen bekannt befestigt ist. Um zu verhindern, daß beim Schrumpfen die Öffnung sich vergrößert und dieser Bereich damit undicht wird, ist die Öffnung mit einem Niet eingefaßt, der die Randbereiche der Öffnung fest einspannt.

Diese Technik ist für wärmerückstellbare Gegenstände geeignet, deren Rückstellung durch ein in einer Kunststoffschicht eingebettetes Gewebe erfolgt. Für wärmerückstellbare Gegenstände die aus einem wärmerückstellbaren Band bestehen, ist die bekannte Technik nicht ohne weiteres anwendbar, da die Gefahr besteht, daß beim Einfassen der Öffnung mit dem Niet die Oberfläche beschädigt werden kann, wodurch dann an der Stelle der Beschädigung beim Wärmeschrumpfen infolge der inneren Spannungen ein Riß auftreten kann, der eine wirksame Umhüllung unmöglich macht.

Die EP-A 116 391 offenbart einen wärmerückstellbaren Gegenstand entsprechend dem Oberbegriff des Anspruchs 1 sowie einen wärmerückstellbaren Gegenstand entsprechend dem Oberbegriff des Anspruchs 7.

Der vorliegenden Erfindung liegt die Aufgabe zugrunde, einen wärmerückstellbaren Gegenstand mit einem Ventil anzugeben, bei welchem eine Gefahr des Einreißens im Bereich der Öffnung für das Ventil nicht besteht.

Diese Aufgabe wird durch die Merkmale der Ansprüche 1 und 7 gelöst.

Die Erfindung geht einen völlig anderen Weg als der Stand der Technik beschreibt. Durch die beiderseitige Einfassung der Randbereiche der Öffnung mit wärmeisolierendem Material wird dafür Sorge getragen, daß beim Schrumpfen die Temperatur der Randbereiche der Öffnung unterhalb der Schrumpftemperatur bleibt. Ein Schrumpfen wird damit in diesem Bereich unterdrückt. Eine Erwärmung der unter Umständen vorzusehenden Schicht aus Heißschmelzkleber, um den Öffnungsbereich abzudichten, erfolgt über den metallischen rohrförmigen Teil.

Weitere vorteilhafte Ausgestaltungen der Erfindung sind in den Unteransprüchen erfaßt und in der nachfolgenden Beschreibung dargelegt.

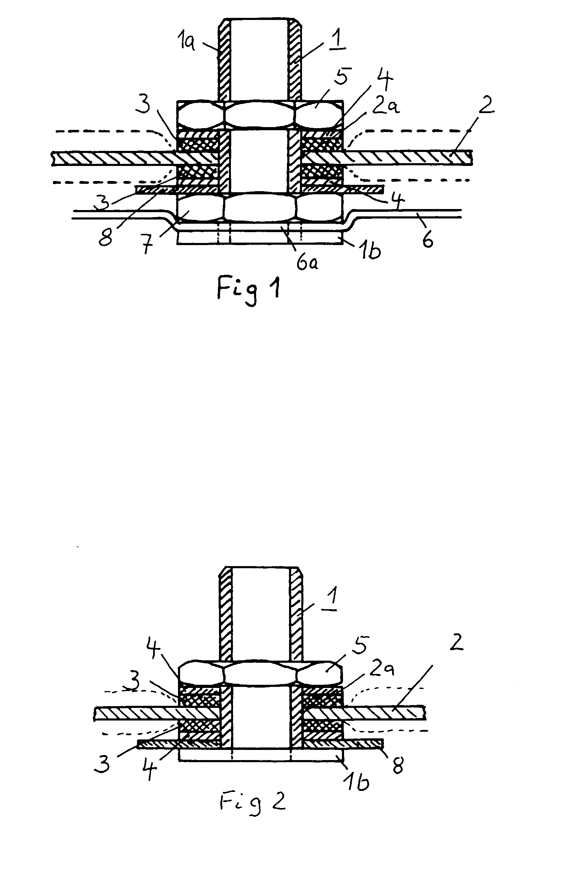

Die Erfindung ist anhand der in den Figuren 1 bis 3 schematisch dargestellten Ausführungsbeispielen näher erläutert.

In der Figur 1 ist eine Anordnung dargestellt, bei welcher ein Ventil 1 in einer Öffnung in einer Manschette 2 befestigt ist. Das Ventil 1 besteht aus einem rohrförmigen Teil 1a und einem Anschlag 1b. Das rohrförmige Teil 1a besitzt ein Außen- und ein Innengewinde. Das rohrförmige Teil 1a ist durch eine Öffnung 2a in der Manschette 2 hindurchgeführt. Die Manschette 2 besteht aus einem wärmerückstellbaren Kunststoffmaterial, in welchem ein Gewebe aus hochfesten Fasern eingebettet sein kann. Der der Öffnung 2a in der Manschette 2 benachbarte Bereich ist beiderseits von je einer Scheibe 3 aus wärmeisolierendem Material überdeckt. Die Scheiben 3 bestehen vorteilhafterweise aus asbestfreiem Fasermaterial. Zwei Metallscheiben 4 sind vorgesehen, um die empfindlichen Scheiben 3 beim Festschrauben einer Mutter 5 nicht zu zerstören. Die Mutter 5 wird mittels des Außengewindes an dem rohrförmigen Teil 1a verschraubt. Mit 6 ist eine sogenannte Einlage bezeichnet, welche um eine nicht dargestellte Spleißverbindung eines Kabels herumgelegt wird, um die Spleiße zu schützen und einen allmählichen Übergang von dem großen Durchmesser der Spleißverbindungsstelle zu dem kleineren Durchmesser der Kabel herzustellen. Als Einlage 6 wird vielfach ein sogenannter Metallkanister verwendet. Die Einlage 6 weist eine Öffnung 6a auf, durch welche das rohrförmige Teil 1a als erstes hindurchgeführt wird. Mittels einer auf das Außengewinde des rohrförmigen Teils 1a aufgeschraubten Mutter 7 wird das Ventil 1 mit der Einlage 6 verschraubt. Anschließend wird zunächst eine Scheibe 8 aus einem Heißschmelzkleber und dann die erste Metallscheibe 4, die erste Scheibe 3, die Manschette 2, die zweite Scheibe 3, die zweite Metallscheibe 4 aufgesteckt und abschließend die Mutter 5 fest angezogen.

Beim Erwärmen der Manschette 2, um diese zum Schrumpfen zu bringen, wird die Heißschmelzkleberscheibe 8 über den aus Metall bestehenden rohrförmigen Teil 1a soweit erwärmt, daß das Heißschmelzklebermaterial verläuft, und damit eine Abdichtung im Bereich der Öffnung 6a erzielt wird. Durch die Scheiben 3 aus wärmeisolierendem Material wird gemäß der Lehre der Erfindung ein Schrumpfen der Randbereiche der Öffnung in der Manschette 2 bewußt unterbunden. Die gestrichelten Linien verdeutlichen die Wanddickenzunahme der Manschette 2.

In das Innengewinde im rohrförmigen Teil 1a ist ein nicht dargestellter Ventileinsatz eingeschraubt, der ein Unterdrucksetzen des Innenraumes der Einlage 6 ermöglicht.

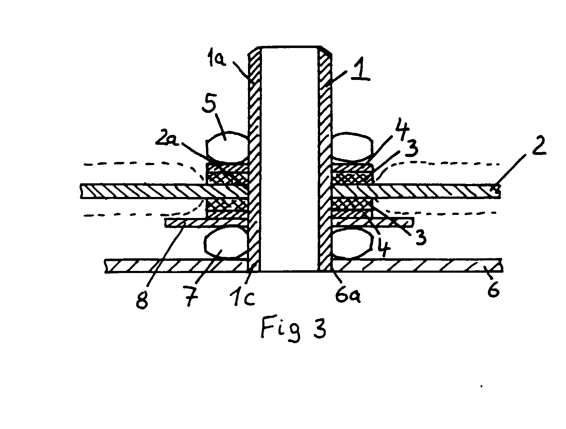

Die Figur 2 zeigt ein Ausführungsbeispiel der Erfindung, bei welchem das Ventil 1 direkt an der Manschette 2 befestigt ist. Auf dem Anschlag 1b sitzt eine Scheibe 8 aus einem Heißschmelzkleber zum Zwecke der Abdichtung. Dann folgen ein Metallring 4, ein Ring 3 aus wärmeisolierendem Material, die Manschette 2, ein weiterer Ring 3 aus wärmeisolierendem Material sowie eine weitere Metallscheibe 4. Dieses Paket wird mit der auf das Außengewinde des rohrförmigen Teils 1a aufgeschraubten Mutter 5 zwischen dieser und dem Anschlag 1b fest verspannt.

Beim Wärmeschrumpfen stellt sich auch hier der Öffnungsbereich der Manschette 2 nicht zurück.

Diese Ausführungsform ist für Spleißverbindungen geeignet, bei welchem eine Einlage nicht vorgesehen ist bzw. eine vollflächige Verklebung zwischen der Einlage und der Manschette nicht vorgesehen ist.

Bei dem Ausführungsbeispiel gemäß Figur 3 ist der Aufbau ähnlich wie in Figur 1. Auf einen Anschlag wird hier jedoch verzichtet.

Auf das rohrförmige Teil 1a sind wie in Figur 1 die Mutter 7 aufgeschraubt sowie eine Scheibe 8 aus Heißschmelzkleber, eine Metallscheibe 4, eine Scheibe 3 aus wärmeisolierendem Material, die Manschette 2, eine weitere Scheibe 3 aus wärmeisolierendem Material und eine weitere Metallscheibe 4 aufgesteckt. Dieses Paket wird mittels einer auf das rohrförmige Teil 1a aufgeschraubten Mutter 5 verspannt.

Bei dieser Anordnung ist wesentlich, daß beim Aufschrauben der Mutter 7 auf das rohrförmige Teil 1a ein Überstand 1c entsteht, der beim Auflegen der Manschette 2 auf den Kanister 6 in die Bohrung 6a eingeführt wird. Dadurch soll ein Verschieben der Manschette 2 beim Wärmeschrumpfen vermieden werden.

## Patentansprüche

1. Wärmerückstellbarer Gegenstand bestehend aus einer Manschette (2) aus Kunststoffmaterial mit einer Öffnung (2a), einem rohrförmigen Teil (1a) mit Innengewinde und Außengewinde, wobei das Teil (1a) durch die Öffnung (2a) hindurchgeführt ist und einen Anschlag (1b) aufweist, einer Mutter (5), welche auf das Außengewinde aufgeschraubt ist, wobei der die Öffnung (2a) umgebende Bereich der genannten Manschette (2) zwischen der Mutter (5) und dem Anschlag (1b) eingespannt ist, und zwei Scheiben (3), die sowohl zwischen dem Anschlag und der Manschette als auch zwischen der Manschette und der Mutter vorgesehen sind, dadurch gekennzeichnet, daß die Scheiben (3) aus wärmeisolierendem Material bestehen.

2. Wärmerückstellbarer Gegenstand nach Anspruch 1, dadurch gekennzeichnet, daß die Scheiben (3) aus asbestfreiem Fasermaterial bestehen.

3. Wärmerückstellbarer Gegenstand nach Anspruch 1 oder 2, dadurch gekennzeichnet, daß zwischen dem Anschlag (1b) und der dem Anschlag (1b) benachbarten Scheibe (3) eine Scheibe (8) aus einem Heißschmelzkleber vorgesehen ist.

4. Wärmerückstellbarer Gegenstand nach Anspruch 3, dadurch gekennzeichnet, daß zwischen der Scheibe (8) aus Heißschmelzkleber und der Scheibe (3) eine Metallscheibe (4) vorgesehen ist.

5. Wärmerückstellbarer Gegenstand nach einem der Ansprüche 1 bis 4, dadurch gekennzeichnet, daß zwischen der Mutter (5) und der Scheibe (3) eine Metallscheibe (4) vorgesehen ist.

6. Wärmerückstellbarer Gegenstand nach einem der Ansprüche 1 bis 5, dadurch gekennzeichnet, daß in der Manschette (2) ein verstärkendes Gewebe eingelagert ist.

7. Wärmerückstellbarer Gegenstand bestehend aus einer Manschette (2) aus Kunststoffmaterial mit einer Öffnung (2a), einem rohrförmigen Teil (1a) mit Innengewinde und Außengewinde, wobei das teil (1a) durch die Öffnung (2a) hindurchgeführt ist, einer Mutter (5), welche auf das Außengewinde aufgeschraubt ist, einem weiteren Element (7), wobei der die Öffnung (2a) umgebende Bereich der genannten Manschette (2) zwischen der Mutter (5) und dem weiteren Element (7) eingespannt ist, und zwei Scheiben (3), die sowohl zwischen dem weiteren Element (7) und der Manschette (2) als auch zwischen der Manschette (2) und der Mutter (5) vorgesehen sind, dadurch gekennzeichnet, daß die Scheiben (3) aus wärmeisolierendem Material bestehen, daß das weitere Element (7) eine auf das rohrförmige Teil (1a) aufgeschraubte zweite Mutter ist und diese zweite Mutter soweit auf das rohrförmige Teil (1a) aufgeschraubt ist, daß ein Überstand (1c) vorsteht.

## Claims

1. Heat-retractable object consisting of a cuff (2) made from plastic material, with an aperture (2a) and a tubular component (1a) with an internal thread and an external thread, with the component (1a) being fed through the aperture (2a), and having a stop (1b), which is screwed onto the external thread, with the area of the cuff referred to surrounding the aperture (2a) being braced between the nut (5) and the stop (1b), and two discs (3), which are provided for both between the stop and the cuff and between the cuff and the nut, distinguished by the fact that the discs (3) consist of heat-insulating material.

2. Heat-retractable object as Claim 1, distinguished by the fact that the discs (3) consist of asbestos-free fibre material.

3. Heat-retractable object as Claim 1 or 2, distinguished by the fact that a disc (8) made from a hot melt adhesive is provided for between the stop (1b) and the disc 3) adjacent to the stop (1b).

4. Heat-retractable object as Claim 3, distinguished by the fact that a metal disc (4) is provided for between the disc (8) made from hot melt adhesive and the disc (3).

5. Heat-retractable object as one of Claims 1 to 4, distinguished by the fact that a metal disc (4) is provided for between the nut (5) and the disc (3).

6. Heat-retractable object as one of Claims 1 to 5, distinguished by the fact that a reinforcement fabric is included within the cuff (2).

7. Heat-retractable object consisting of a cuff (2) made from plastic material with an aperture, a tubular component (1a) with an internal thread and an external thread, with the component (1a) being fed through the aperture (2a), a nut (5) which is screwed onto the external thread, and an additional element, with the area of the cuff referred to surrounding the aperture (2a) being braced between the nut (5) and the second element (7), and two discs (3) which are provided for both between the additional element (7) and the cuff (2) and between the cuff (2) and the nut (5), distinguished by the fact that the discs (3) consist of heat-insulating material, that the additional element (7) is a second nut, screwed onto the tubular component (1a), and that this second nut is screwed so far onto the tubular component that a projecting end (1c) protrudes.

## Revendications

1. Article doué de reprise de forme à chaud, comprenant une manchette (2) en matière plastique munie d'un orifice (2a), une partie tubulaire (1a) munie d'un taraudage et d'un filetage, la partie (1a) étant guidée à travers l'orifice (2a) et étant munie d'une butée (1b), un écrou (5) qui est vissé sur le filetage, la zone de ladite manchette (2) entourant l'orifice (2a) étant encastrée entre l'écrou (5) et la butée (1b), et deux plaquettes (3) qui sont prévues l'une entre la butée et la manchette, et l'autre entre la manchette et l'écrou, caractérisé en ce que les plaquettes (3) sont réalisées dans un matériau isolant thermique.

2. Article doué de reprise de forme à chaud selon la revendication 1, caractérisé en ce que les plaquettes (3) sont réalisées en fibres exemptes d'amiante.

3. Article doué de reprise de forme à chaud selon la revendication 1 ou 2, caractérisé en ce qu'une plaquette (8) en colle thermofusible est prévue entre la butée (1b) et la plaquette (3) contiguë à la butée (1b).

4. Article doué de reprise de forme à chaud selon la revendication 3, caractérisé en ce qu'une plaquette métallique (4) est prévue entre la plaquette (8) en colle thermofusible et la plaquette (3).

5. Article doué de reprise de forme à chaud selon l'une quelconque des revendications 1 à 4, caractérisé en ce qu'une plaquette métallique (4) est prévue entre l'écrou (5) et la plaquette (3).

6. Article doué de reprise de forme à chaud selon l'une quelconque des revendications 1 à 5, caractérisé en ce qu'un tissu de renforcement est inséré dans la manchette (2).

7. Article doué de reprise de forme à chaud comprenant une manchette (2) en matière plastique munie d'un orifice (2a), une partie tubulaire (1a) munie d'un taraudage et d'un filetage, la partie (1a) étant guidée à travers l'orifice (2a), un écrou (5) qui est vissé sur le filetage, un élément supplémentaire (7), la zone de ladite manchette (2) entourant l'orifice (2a) étant encastrée entre l'écrou (5) et l'élément supplémentaire (7), et deux plaquettes (3) qui sont prévues l'une entre l'élément supplémentaire (7) et la manchette (2), et l'autre entre la manchette (2) et l'écrou (5), caractérisé en ce que les plaquettes (3) sont réalisées dans un matériau isolant thermique, en ce que l'élément supplémentaire (7) est un deuxième écrou vissé sur la partie tubulaire (1a) et ledit deuxième écrou est vissé sur la partie tubulaire (1a) jusqu'à ce qu'une partie (1c) s'y dégage en saillie.
